# EUROPÄISCHE PATENTSCHRIFT

(11) **EP 1 799 526 B1**
(45) Veröffentlichungstag und Bekanntmachung des Hinweises auf die Patenterteilung: **23.04.2008**
(21) Anmeldenummer: 05770232.6
(22) Anmeldetag: 13.07.2005
(51) Int. Cl.: B62B 3/14

(54) **TRANSPORTWAGEN**
TRANSPORT TROLLEY
CHARIOT DE TRANSPORT

(30) Priorität: 14.09.2004 DE 102004044408
(43) Veröffentlichungstag der Anmeldung: 27.06.2007
(73) Patentinhaber: Wanzl Metallwarenfabrik GmbH, 89336 Leipheim (DE)
(72) Erfinder: SCHAULE, Dietmar, 86877 Walkertshofen (DE)
(86) Internationale Anmeldenummer: PCT/DE2005/001235
(87) Internationale Veröffentlichungsnummer: WO 2006/029581

(56) Entgegenhaltungen:
- EP-A- 0 466 065
- DE-A1- 3 335 238
- FR-A- 1 335 086

## Beschreibung

Die Erfindung betrifft einen Transportwagen gemäß dem Oberbegriff des unabhängigen Anspruchs 1 und des unabhängen Anspruches 2. Derartige Transportwagen sind bekannt. Dokument DE 3335238, das alle Merkmale des Oberbegriffs des Ansprüche 1 u. 2 enthält zeigt einem derartigen Transportwagen.

Es soll sichergestellt sein, dass beim Fahren mit dem Transportwagen auf unebenem Gelände ein selbsttätiges Lösen, und damit ein unbeabsichtigtes Herabfallen des Trittpodestes vermieden wird.

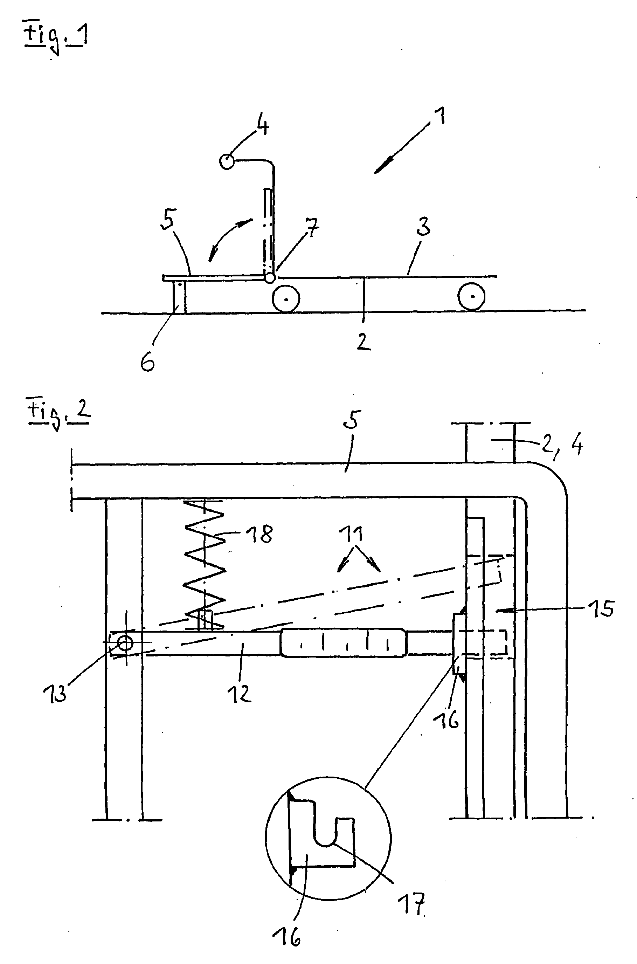

Anhand der Zeichnungen Fig. 1 und 2 wird die aufgefundene Lösung näher beschrieben.

Der Transportwagen 1 weist ein Fahrgestell 2, beispielsweise eine Plattform 3, sowie eine Schiebeeinrichtung 4 auf. Nahe der Schiebeeinrichtung 4 ist in bekannter Weise ein Trittpodest 5 um eine horizontale Achse 7 schwenkbar am Transportwagen 1 befestigt. Das Trittpodest 5 lässt sich aus einer Nichtgebrauchslage, in welcher es hochgeklappt am Transportwagen 1 anliegt, nach unten in eine Gebrauchslage bewegen, in welcher es waagrecht angeordnet und mit Stützen 6 am Fußboden abgestützt ist. Aus der Gebrauchslage lässt sich das Trittpodest 5 wieder zurück in die Nichtgebrauchslage bewegen.

An der Unterseite des Trittpodestes ist ein um eine horizontale Achse 13 begrenzt verschwenkbarer Riegel 12 angeordnet, der beispielsweise mit seinem anderen Ende in einem am Trittpodest 5 angeordneten Langloch 15 zusätzlich geführt ist. Nahe des Langloches 15 ist eine Falle 16 ortsfest am Fahrgestell 2 oder an der Schiebeeinrichtung 4 angeordnet. Der Riegel 12 taucht in verriegeltem Zustand in eine Vertiefung 17 der Falle 16 ein. Eine am Trittpodest 5 angeordnete, am Riegel 12 sich abstützende Druckfeder 18 drückt den Riegel 12 in die Vertiefung 17. Der Riegel 12, die Falle 15 und die Druckfeder 18 bilden eine Verriegelungseinrichtung 11, welche im ver-riegelten Zustand bewirkt, dass sich das hochgeklappte Trittpodest 5 auch beim Fahren auf holprigem Gelände nicht selbsttätig löst und herabstürzt. Will man das Trittpodest 5 nach unten in die Gebrauchslage bringen, muss lediglich der Riegel 12 gegen die Wirkung der Druckfeder 18 so weit angehoben werden, dass sich der Riegel 12 außerhalb der Falle 16 befindet. Dadurch ist die Verriegelungswirkung der Verriegelungseinrichtung 11 aufgehoben.

Alternativ kann der Riegel 12 ortsfest am Trittpodest 5 angeordnet und dafür die Falle 16 entsprechend von Hand bewegbar am Fahrgestell 2 oder an der Schiebeeinrichtung 4 vorgesehen sein. Bei dieser Anordnung drückt die Druckfeder 18 die Falle 16 mit ihrer Vertiefung 17 voraus gegen den Riegel 12. Beim Lösen der Verriegelungseinrichtung 11 muss die Falle von Hand gegen die Wirkung der Druckfeder vom Riegel 12 gelöst werden.

## Patentansprüche

1. Transportwagen (1) mit einem nahe seiner Schiebeeinrichtugn (4) angeordneten Trittpodest (5), das aus einer Gebrauchslage, in welcher es am Boden abgestützt ist, nach oben in eine Nichtgebrauchslage verschwenkbar und in dieser Lage durch eine Verriegelungseinrichtung (11) sicherbar ist, **dadurch gekennzeichnet, dass** die Verriegelungseinrichtung (11) durch einen am Trittpodest (5) um eine horizontale Achse (13) begrenzt verschwenkbaren Riegel (12) und eine am Fahrgestell (2) des Transportwagens (1) ortsfest angeordnete, eine Vertiefung (17) aufweisende Falle (16) gebildet ist und dass in verriegelter Lage der Verschließeinrichtung (11) der Riegel (12) durch Federkraft in die Vertiefung (17) der Falle (16) gedrückt ist.

2. Transportwagen (1) mit einem nahe seiner Schiebeeinrichtung (4) angeordneten Trittpodest (5), das aus einer Gebrauchslage, in welcher es am Boden abgestützt ist, nach oben in eine Nichtgebrauchslage verschwenkbar und in dieser Lage durch eine Verriegelungseinrichtung (11) sicherbar ist, **dadurch gekennzeichnet, dass** die Verriegelungseinrichtung (11) durch einen am Trittpodest (5) ortsfest angeordneten Riegel (12) und eine am Fahrgestell (2) des Transportwagens (1) bewegbar angeordnete, eine Vertiefung (1) aufweisende Falle (16) gebildet ist und dass in verriegelter Lage der Verschließeinrichtung (11) die Falle (16) mit ihrer Vertiefung (17) mittels Federkraft gegen den Riegel gedrückt ist.

## Claims

1. A trolley (1) having a step board (5) which is arranged in the vicinity of its pushing means (4) and which is pivotable upwards from its position of use, in which it is supported on the floor, into a position of non-use and is securable in this position by a locking means (11), **characterised in that** the locking means (11) is formed by a bolt (12), which is pivotable to a limited extent about a horizontal axis (13) on the step board (5), and a catch (16) which is fixedly arranged on the wheel frame (2) of the trolley (1) and has a recess (17), and **in that**, in the locked position of the locking means (11), the bolt (12) is pushed by spring force into the recess (17) in the catch (16).

2. A trolley (1) having a step board (5) which is arranged in the vicinity of its pushing means (4) and which is pivotable upwards from its position of use, in which it is supported on the floor, into a position of non-use and is securable in this position by a locking means (11), **characterised in that** the locking means (11) is formed by a bolt (12), which is fixedly arranged on the step board (5), and a catch (16) which is movably arranged on the wheel frame (2) of the trolley (1) and has a recess (17), and **in that**, in the locked position of the locking means (11), the catch (16) with its recess (17) is pressed against the bolt by spring force.

## Revendications

1. Chariot de transport (1) avec un marchepied (5) qui est disposé à proximité de son dispositif de poussée (4) et qui peut être pivoté vers le haut, d'une position d'utilisation dans laquelle il est soutenu sur le sol, dans une position de non-utilisation, et assujetti dans cette position par un dispositif de verrouillage (11), **caractérisé en ce que** le dispositif de verrouillage (11) est formé par un loquet (12) monté sur le marchepied (5) à pivotement limité autour d'un axe horizontal (13) et par un mentonnet (16) disposé fixement sur le châssis (2) du chariot de transport (1) et présentant un renfoncement (17), et **en ce que**, dans la position verrouillée du dispositif de verrouillage (11), le loquet (12) est poussé par force de ressort dans le renfoncement (17) du mentonnet (16).

2. Chariot de transport (1) avec un marchepied (5) qui est disposé à proximité de son dispositif de poussée (4) et qui peut être pivoté vers le haut, d'une position d'utilisation dans laquelle il est soutenu sur le sol, dans une position de non-utilisation, et assujetti dans cette position par un dispositif de verrouillage (11), **caractérisé en ce que** le dispositif de verrouillage (11) est formé par un loquet (12) disposé stationnairement sur le marchepied (5) et par un mentonnet (16) disposé à déplacement sur le châssis (2) du chariot de transport (1) et présentant un renfoncement (17), et **en ce que**, dans la position verrouillée du dispositif de verrouillage (11), le renfoncement (17) du mentonnet (16) est poussé sur le loquet par force de ressort.
